# EUROPÄISCHE PATENTSCHRIFT

(11) **EP 3 724 048 B1**
(45) Veröffentlichungstag und Bekanntmachung des Hinweises auf die Patenterteilung: **09.02.2022**
(21) Anmeldenummer: 18830215.2
(22) Anmeldetag: 17.12.2018
(51) Int. Cl.: B60T 15/02, B60T 15/30, B60T 15/42

(54) **SICHER SCHLIESSENDES BESCHLEUNIGUNGSVENTIL FÜR SELBSTTÄTIGE DRUCKLUFTBREMSEN VON SCHIENENFAHRZEUGEN**
SECURELY CLOSING ACCELERATION VALVE FOR AUTOMATIC COMPRESSED AIR BRAKES OF RAIL VEHICLES
VALVE D'ACCÉLÉRATION À FERMETURE SÛRE POUR FREINS À AIR COMPRIMÉ AUTOMATIQUES DE VÉHICULES FERROVIAIRES

(30) Priorität: 15.12.2017 DE 102017222978; 02.02.2018 DE 102018201654
(43) Veröffentlichungstag der Anmeldung: 21.10.2020
(73) Patentinhaber: KNORR-BREMSE Systeme für Schienenfahrzeuge GmbH, 80809 München (DE)
(72) Erfinder: HELLER, Martin, 85716 Unterschleißheim (DE); LUND, Karsten, 24306 Plön (DE); PETTER, Thomas, 80336 München (DE); SONNTAG, Stefan, 82024 Taufkirchen (DE)
(86) Internationale Anmeldenummer: PCT/EP2018/085351
(87) Internationale Veröffentlichungsnummer: WO 2019/115837

(56) Entgegenhaltungen:
- CH-A- 345 030
- DE-A1- 1 455 309

## Beschreibung

Die vorliegende Erfindung betrifft ein sicher schließendes Beschleunigungsventil für selbsttätige Druckluftbremsen von Schienenfahrzeugen.

Schienenfahrzeuge haben meist eine selbsttätige (automatische) Druckluftbremse, bei der die Absenkung eines bestehenden Drucks in einer über die gesamte Zuglänge verlaufenden Hauptluftleitung, ausgehend von einem Regelbetriebsdruck, die Ausbildung eines Bremszylinderdruckes hervorruft. Die Übertragungsfunktion vom sinkenden Druck in der Hauptluftleitung zum steigenden Bremszylinderdruck und umgekehrt wird von Steuerventilen realisiert.

Da insbesondere bei langen Zügen die Druckabsenkung in der Hauptluftleitung sich nicht ausreichend schnell über die gesamte Zuglänge ausbreitet, sind Beschleunigungseinrichtungen entwickelt worden, welche bei Beginn einer Bremsung zusätzliche Entlüftungsöffnungen der Hauptluftleitung freigeben, um eine beschleunigte, Entlüftung der Hauptluftleitung zu realisieren.

Derartige Beschleunigungseinrichtungen, insbesondere Beschleunigungsventile, sind grundsätzlich bekannt. So offenbaren die Patentschriften DE 21 65 092 B und DE 21 65 144 B Steuerventile mit einer Beschleunigungseinrichtung, welche aufgrund des Unterschieds eines Drucks in der Hauptluftleitung zu einem Druck in einer Steuerkammer geöffnet wird. Zur Öffnung der Beschleunigungseinrichtung wird mechanisch ein Ventilteller angehoben, wodurch eine fluidische Verbindung der Hauptluftleitung durch eine Steuerhülse zur Atmosphäre zur beschleunigten Entlüftung der Hauptluftleitung geschaffen wird. Die Steuerhülse selbst ist in Richtung des Ventiltellers durch eine Feder belastet und mittels eines Arretierstiftes kraftschlüssig arretiert.

Ist die beschleunigte Entlüftung ausreichend erfolgt, gibt der Arretierstift die Steuerhülse frei, wodurch diese durch die Feder in Richtung des Ventiltellers nachläuft und wieder mit diesem in Kontakt tritt, wodurch das Beschleunigungsventil wieder verschlossen ist. Die Federkraft sorgt bei gelöster Arretierung also für die Dichtigkeit des Ventils.

Ein Nachteil dieser Ausführung ist jedoch, dass die Dichtkraft des Beschleunigungsventils durch die Feder bei bestehender Arretierung aufgehoben wird, da der Arretierstift bzw. dessen Reibkraft auf die Steuerhülse stets höher ist als die Kraft der Feder. So besteht die Gefahr, dass die Steuerhülse kleinen Bewegungen des Ventiltellers nicht folgen kann und dass sich das Beschleunigungsventil aufgrund von Stößen während des Fahrbetriebs oder aufgrund von auftretenden und unbeabsichtigten Druckschwankungen in der Hauptluftleitung öffnet und die Hauptluftleitung unbeabsichtigt an die Atmosphäre entlüftet wird.

Weiter sind aus der CH 345 030 A eine Steuereinrichtung mit Dreidrucksteuerventil an Druckluftbremsen, insbesondere für Schienenfahrzeuge, und aus der DE 14 55 309 A1 ein Steuerventil für eine druckmittelbetätigte Bremseinrichtung bekannt.

Daher ist es Aufgabe der vorliegenden Erfindung, ein Beschleunigungsventil zur Verfügung zu stellen, das einen zuverlässigen Verschluss der Hauptluftleitung gegenüber der Atmosphäre erlaubt.

Diese Aufgabe wird mittels der unabhängigen Ansprüche gelöst. Vorteilhafte Weiterbildungen sind Gegenstand der Unteransprüche.

Erfindungsgemäß ist ein Ventil, insbesondere ein Beschleunigungsventil, zur Herstellung und sicheren Unterbrechung einer fluidischen Verbindung einer Hauptluftleitung mit der Atmosphäre vorgesehen, wobei das Ventil ein Gehäuse mit einer Eintrittsöffnung und einer Austrittsöffnung, die fluidisch miteinander in Verbindung stehen, ein erstes Ventilelement, das dazu ausgebildet ist, die fluidische Verbindung zwischen der Eintrittsöffnung und der Austrittsöffnung herzustellen oder zu unterbrechen, ein zweites Ventilelement, das dazu ausgebildet ist, zur Unterbrechung der fluidischen Verbindung dichtend mit dem ersten Ventilelement in Kontakt zu treten, aufweist, wobei der Kontakt zwischen dem ersten Ventilelement und dem zweiten Ventilelement durch ein zusätzliches Element mit einer elastischen Vorspannkraft beaufschlagt ist, wodurch die Kontaktkraft des ersten Ventilelements und/oder des zweiten Ventilelements erhöht wird.

Dies hat den Vorteil, dass beide Ventilelemente durch das zusätzliche Element, insbesondere durch dessen Kraft, stets gegeneinander gepresst werden, wodurch die Dichtkraft dieser Verbindung erhöht wird und die Verbindung unempfindlicher gegenüber Stößen aus dem Fahrbetrieb oder Druckschwankungen im pneumatischen Bremssystem ist.

Vorzugsweise ist das erste Ventilelement zur Herstellung und Unterbrechung der fluidischen Verbindung in einer Betätigungsrichtung beweglich im Gehäuse vorgesehen und/oder als Bestandteil der fluidischen Verbindung ausgebildet.

Die Betätigungsrichtung ist vorzugsweise als gekrümmte Trajektorie, besonders bevorzugt als Gerade ausgeführt. Die Betätigungsrichtung weist dabei in Richtung des ersten Ventilelements. D.h. bewegt sich das erste Ventilelement von dem zweiten Ventilelement weg, so bewegt es sich in Betätigungsrichtung.

Das erste Ventilelement, vorzugsweise ein Ventilteller oder ein Ventilsitz, kann somit vorzugsweise in einer Betätigungsbewegung parallel zu der Betätigungsrichtung, besonders bevorzugt in einer geradlinigen Verschiebung innerhalb des Gehäuses bewegt werden, wodurch die fluidische Verbindung zwischen der Eintrittsöffnung und der Austrittsöffnung hergestellt oder unterbrochen wird.

Erfindungsgemäß ist das zweite Ventilelement auf einem Steuerelement, insbesondere als Teil eines Steuerelements, ausgebildet, das in der Betätigungsrichtung beweglich im Gehäuse vorgesehen ist, und/oder Bestandteil der fluidischen Verbindung ist.

Das zweite Ventilelement, vorzugsweise ein Ventilteller oder ein Ventilsitz, kann somit vorzugsweise in einer Betätigungsbewegung parallel zu der Betätigungsrichtung, besonders bevorzugt in einer geradlinigen Verschiebung innerhalb des Gehäuses bewegt werden, wodurch die fluidische Verbindung zwischen der Eintrittsöffnung und der Austrittsöffnung hergestellt oder unterbrochen wird.

Vorzugsweise ist das Steuerelement als durchströmbarer Körper, besonders bevorzugt als Steuerhülse ausgebildet, welche ebenfalls Teil der fluidischen Verbindung zwischen der Eintrittsöffnung und der Austrittsöffnung ist.

Erfindungsgemäß weist das Ventil ein Führungselement auf, das dazu ausgebildet ist, eine Haltekraft parallel zur Betätigungsrichtung auf das Steuerelement zu übertragen, um zu verhindern, dass das zweite Ventilelement mit dem ersten Ventilelement in Kontakt tritt. Vorteilhafterweise kann somit das Steuerelement, und somit das zweite Ventilelement durch das Führungselement kontrolliert werden, wodurch ermöglicht wird, den Schließzeitpunkt des Beschleunigungsventils zu kontrollieren.

Vorzugsweise sind mindestens das erste Ventilelement oder das zweite Ventilelement oder das Führungselement koaxial zu einer gemeinsamen Achse ausgerichtet, wobei diese gemeinsame Achse vorzugsweise parallel zur Betätigungsrichtung orientiert ist.

Erfindungsgemäß ist zwischen Steuerelement und Führungselement eine Verbindung ausgebildet, die eine begrenzte Relativbewegung zwischen Steuerelement und Führungselement in Betätigungsrichtung erlaubt.

Vorzugsweise ist die Verbindung so ausgebildet, dass sie es beiden Elementen erlaubt, sich in bestimmten Verschiebungsgrenzen relativ zueinander zu bewegen. Somit kann vorteilhafterweise erreicht werden, dass beide Elemente keine Kräfte aufeinander in Betätigungsrichtung übertragen, wenn beide durch entsprechende Kontakte fixiert sind. Vorzugsweise ist die Verbindung in Form einer Kombination aus Langloch und Stift, die miteinander in Eingriff stehen, ausgebildet.

Das Langloch kann dabei beispielsweise auf dem Steuerelement und der Stift auf dem Führungselement ausgebildet sein.

In einer anderen Ausführungsform sind das Langloch auf dem Führungselement und der Stift auf dem Steuerelement ausgebildet.

Das Langloch ist dabei vorzugsweise in Betätigungsrichtung orientiert, wobei eine Relativbewegung beider Elemente möglich ist, solange der Stift nicht das Ende des Langlochs erreicht hat. Stößt der Stift am Ende das Langlochs an, so kann keine weitere relative Verschiebung zwischen beiden Elementen in dieser Richtung stattfinden.

In einer weiteren Ausführungsform ist die Verbindung in Form einer Kombination aus Anschlag und Gegenstück ausgebildet.

Dabei kann ein Anschlag vorzugsweise an dem Steuerelement und/oder dem Führungselement vorgesehen sein, wobei dieser vorzugsweise bei Erreichen der maximalen Relativverschiebung beider Elemente, mit einem Gegenstück auf dem jeweils anderen Element in Kontakt tritt, wodurch eine weitere Relativverschiebung blockiert ist.

Vorzugsweise ist weiterhin ein Arretierstift vorgesehen, der dazu ausgebildet ist, mit dem Führungselement in Kontakt zu treten und dieses zu arretieren.

Der Arretierstift ist vorzugsweise als Teil einer Arretiervorrichtung ausgebildet, welche das Führungselement abhängig vom Betriebszustand des Beschleunigungsventils arretiert.

Der Arretierstift steht zu diesem Zweck vorzugsweise mit einem Ende, besonders bevorzugt mit der Stirnseite dieses Endes, mit der Oberfläche des Führungselements in Kontakt, wobei er durch die Arretiervorrichtung mit einer Kraft, vorzugsweise einer Federkraft, in Richtung des Führungselements beaufschlagt ist.

Die Arretierung des Führungselements erfolgt vorzugsweise kraftschlüssig, wobei der Arretierstift, besonders bevorzugt mit der Stimseite seines freien Endes, auf die Oberfläche des Führungselements gedrückt wird und dieses an einer Verschiebung parallel zur Betätigungsrichtung blockiert.

Die Arretierung erfolgt in einer weiteren Ausführungsform nicht rein kraftschlüssig. Stattdessen ist das freie Ende des Arretierstiftes so ausgebildet, dass es mit einer entsprechend geformten Oberfläche des Führungselements in Kontakt treten kann, wodurch das Führungselement in einer weiteren Bewegung auf das erste Ventilelement zu blockiert wird.

Vorzugsweise weist die Oberfläche des Führungselements eine schräge Fläche auf oder ist besonders bevorzugt konisch ausgebildet, wobei sich die schräge Fläche oder die Konusform in Richtung des Steuerelements verjüngt.

Der Arretierstift, vorzugsweise dessen Ende, besonders bevorzugt dessen Stirnfläche, ist vorzugsweise so ausgebildet, dass er bei Kontakt mit der Oberfläche der schrägen Fläche oder der Konusform mit dieser über eine möglichst große Fläche in Kontakt tritt und eine Verschiebung des Führungselements in Richtung des Steuerelements verhindert. Gleichzeitig bildet sich in diesem Kontakt eine Reibkraft aus, die der Verschiebung des Führungselements ebenfalls entgegenwirkt.

Vorzugsweise ist das mindestens eine zusätzliche Element als mindestens eine Feder ausgebildet, die das erste Ventilelement und/oder das zweite Ventilelement direkt oder indirekt mit einer Kraft in Richtung des anderen Ventilelements beaufschlagt und sich im Gehäuse abstützt.

Somit wirkt auf das erste und/oder zweite Ventilelement eine elastische Vorspannkraft, die das entsprechende Element auf das andere zubewegt. So wird bei geschlossenem Ventil, also wenn das erste und das zweite Ventilelement miteinander in Kontakt stehen und dadurch die fluidische Verbindung unterbrochen ist, die Kontaktkraft beider Elemente durch mindestens eine Feder erhöht, wodurch ein sicherer Verschluss des Ventils gewährleistet ist.

Die Federkraft kann dabei auf das erste oder das zweite Ventilelement direkt wirken, oder indirekt über Zwischenelemente, wie das Steuerelement, Kolbenstangen oder Stößel übertragen werden.

Vorzugsweise ist das Führungselement durch eine elastische Vorspannkraft einer Feder, die sich im Gehäuse abstützt, parallel zur Betätigungsrichtung in Richtung des zweiten Ventilelements beaufschlagt.

Somit wird sichergestellt, dass sich das Führungselement, wenn es nicht mehr mit dem Arretierstift in Kontakt steht, in Richtung des Steuerelements bewegt und dadurch einen Verschluss des Ventils durch Kontakt des ersten Ventilelements mit dem zweiten Ventilelement ermöglicht.

Vorzugsweise weist das Ventil weiterhin einen Aktuator auf, der dazu ausgebildet ist, das erste Ventilelement zur Herstellung der fluidischen Verbindung aufgrund eines Druckunterschiedes in der Hauptluftleitung und einer Steuerkammer parallel zur Betätigungsrichtung zu bewegen.

Somit ist es möglich das Beschleunigungsventil in ein entsprechendes Bremssystem zu integrieren und mit bestehenden Leitungen, wie einer Hauptluftleitung und einem Anschluss für eine Steuerkammer zu verbinden.

Vorzugsweise weist das Ventil mindestens einen Anschlag auf, der dazu ausgebildet ist, die Bewegung des ersten Ventilelements oder des zweiten Ventilelements zu begrenzen. Dabei kann der Anschlag direkt, oder auch über andere Elemente, wie beispielsweise damit verbundenen Kolben, mit dem entsprechenden Ventilelement in Kontakt treten.

Damit kann erreicht werden, dass sich das entsprechende Ventilelement in einer bestimmten Betriebsphase, vorzugsweise in einer Betriebsphase mit gelöster Bremse, in einer definierten Position befindet. Tritt das andere Ventilelement mit diesem Ventilelement in Kontakt, so ist auch dieses in einer definierten Position. Somit befinden sich die Ventilelemente und weitere, damit verbundene Bauteile des Ventils in definierten Positionen, so dass Öffnungs- und Schließhübe stets gleich ausfallen.

Vorzugsweise ist das erste Ventilelement als Ventilteller, und/oder das zweite Ventilelement als Ventilsitz, und/oder das Steuerelement als Steuerhülse, und/oder das Führungselement als Hülse ausgeführt.

Der Ventilteller kann so vorteilhafterweise einfach parallel zur Betätigungsrichtung dichtend mit dem Ventilsitz in Verbindung gebracht werden, um die fluidische Verbindung zu unterbrechen. Zur Herstellung dieser Verbindung muss er hingegen lediglich von dem Ventilsitz abgehoben werden.

Der Ventilsitz ist dabei vorzugsweise auf einem Ende der Steuerhülse ausgebildet und kann dichtend zur Unterbrechung der fluidischen Verbindung mit dem Ventilteller in Kontakt treten.

Die Steuerhülse weist in ihrem Inneren vorzugsweise Elemente zur Strömungskontrolle, besonders bevorzugt eine Düse auf. Sie bildet vorzugsweise einen Teil der fluidischen Verbindung wodurch diese Verbindung leicht durch Verfahren der Steuerhülse in Betätigungsrichtung kontrolliert werden kann.

Ist das Führungselement als Hülse ausgebildet, so ist gewährleistet, dass, beide Elemente so aneinander anliegen, dass die Steuerhülse zumindest teilweise durch das Führungselement geführt und gelagert wird. Es kann somit auf weitere Führungs- und Lagerstellen für die Steuerhülse innerhalb des Gehäuses verzichtet werden.

In einer weiteren Ausführungsform der Erfindung ist ein Steuerventil für Druckluftbremsen vorgesehen, das eine fluidische Verbindung mit einer Bremsleitung oder mit einem Bremszylinder, eine fluidische Verbindung mit einer Hauptluftleitung, eine fluidische Verbindung mit einer Steuerkammer und eine fluidische Verbindung mit einem Druckspeicher aufweist, wobei das Steuerventil dazu ausgebildet ist, die Bremsleitung oder den Bremszylinder aufgrund eines Druckunterschieds zwischen der Hauptluftleitung und der Steuerkammer mit einer definierten Menge an Druckluft aus dem Druckspeicher zu beaufschlagen, die dem Druckunterschied entspricht. Ein derartiges Ventil ist aus dem Stand der Technik bekannt.

Dieses ist nun erfindungsgemäß durch ein oben beschriebenes Ventil ergänzt, um zur beschleunigten Entlüftung der Hauptluftleitung eine zusätzliche fluidische Verbindung zur Atmosphäre oder einer Entlüftungseinrichtung schaffen zu können.

Das Steuerventil ist also vorteilhafterweise durch ein sicher schließendes Ventil zur beschleunigten Entlüftung der Hauptluftleitung ergänzt, wodurch ein unerwünschtes Verbinden der Hauptluftleitung mit der Atmosphäre vermieden oder zumindest erschwert wird.

In einer weiteren Ausführungsform der Erfindung ist ein Schienenfahrzeug mit einer pneumatischen Bremsanlage vorgesehen, die ein oben beschriebenes Steuerventil aufweist.

Die oben beschriebenen Ausführungsformen wirken nicht beschränkend auf den Gegenstand der Erfindung. Vielmehr sind weitere Ausführungsformen denkbar, die durch Kombination mindestens zweier zuvor beschriebener Merkmale erhalten werden können. Zudem sind vorteilhafte Weiterbildungen der Erfindung denkbar, die ebenfalls durch den Schutzbereich dieser Anmeldung abgedeckt sind. So kann beispielsweise eine Entlüftung der Hauptluftleitung auch anstatt an die Atmosphäre, an eine Entlüftungseinrichtung erfolgen, die vorzugsweise als zusätzliche Kammer ausgebildet ist und bei Öffnung des oben beschriebenen Ventils einen Teil der Druckluft aufnimmt und somit zur beschleunigten Entlüftung bzw. zur Drucksenkung der Hauptluftleitung beiträgt.

Im Weiteren erfolgt die Beschreibung bevorzugter Ausführungsbeispiele der Erfindung mithilfe der beigefügten Zeichnungen.

Im Einzelnen zeigt:
Fig. 1 eine erste Ausführungsform des erfindungsgemäßen Ventils,
Fig. 2 eine vorteilhafte Weiterbildung der Ausführungsform aus Fig. 1,
Fig. 3 eine alternative Ausführungsform des erfindungsgemäßen Ventils.

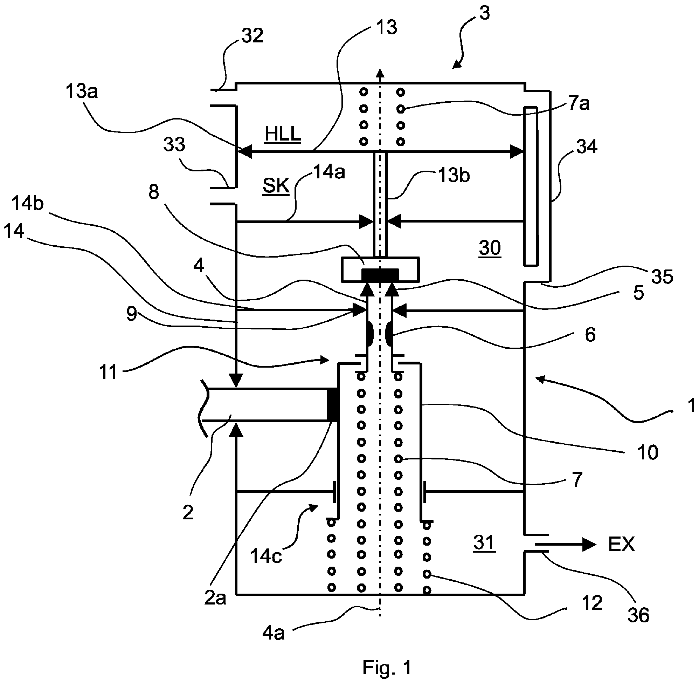

**Fig. 1** zeigt eine erste Ausführungsform des erfindungsgemäßen Ventils 1.

Es ist ein Gehäuse 14 mit einer Eintrittsöffnung 35 und einer Austrittsöffnung 36 gezeigt, wobei die Eintrittsöffnung 35 mit einer Hauptluftleitung HLL und die Austrittsöffnung 36 mit der Atmosphäre EX in Verbindung steht.

Innerhalb des Ventils 1, bzw. des Gehäuses 14, ist ein Ventilteller 8 ausgebildet, welcher mit einem Ventilsitz 5 in Kontakt steht, wodurch eine fluidische Verbindung zwischen der Eintrittsöffnung 35 und der Austrittsöffnung 36 unterbrochen ist.

Der Ventilsitz 5 ist an einem Ende einer Steuerhülse 4 ausgebildet. Die Steuerhülse 4 durchragt dabei eine Trennwand 14b, welche das Gehäuse 14 in zwei Räume 30, 31 unterteilt.

Raum 30 weist dabei die Eintrittsöffnung 35 auf, und steht somit mit der Hauptluftleitung HLL in Verbindung. Raum 31 weist die Austrittsöffnung 36 auf und steht somit mit der Atmosphäre EX in Verbindung.

Die Stelle, an der die Steuerhülse 4 die Trennwand 14b durchragt ist mit einer gleitenden Abdichtung 9 versehen, welche erlaubt, die Steuerhülse 4 in der Zeichnung nach oben und unten zu verschieben, wobei gleichzeitig keine fluidische Verbindung zwischen den Räumen 30, 31 an der Außenseite der Steuerhülse 4 vorbei besteht.

Die einzige fluidische Verbindung zwischen den Räumen 30, 31 kann lediglich durch den Innenraum der Steuerhülse 4 hergestellt werden, welcher zur Regulierung der Durchströmung mit einer Düse 6 versehen ist.

Ferner ist eine Betätigungsrichtung 4a gezeigt, wobei sich die Steuerhülse 4 sowie der Ventilteller 8 parallel zu dieser Betätigungsrichtung 4a bewegen können. Die Betätigungsrichtung 4a entspricht in dieser Darstellung einer Achse, zu der der Ventilteller 8 sowie Ventilsitz 5 und Steuerhülse 4 rotationssymmetrisch ausgebildet sind. Es kommen jedoch auch andere Ausgestaltungen dieser Elemente, beispielsweise mit rechteckigem Querschnitt in Betracht.

Weiterhin ist ein zylindrisches, hohles Führungselement 10 gezeigt, welches mittels einer Führung 14c im Gehäuse verschiebbar vorgesehen ist, wobei dieses Führungselement 10 ebenfalls parallel zur Betätigungsrichtung 4a verschiebbar ausgebildet ist.

Zwischen Führungselement 10 und Steuerhülse 4 ist eine Verbindung 11 ausgebildet, welche es erlaubt, dass sich Steuerhülse 4 und Führungselement 10 parallel zur Betätigungsrichtung 4a gegeneinander bewegen können, wobei bei Erreichen einer vorbestimmten maximalen Verschiebung der Steuerhülse 4 gegenüber dem Führungselement 10 eine weitere Verschiebung darüber hinaus durch die Verbindung 11 blockiert wird.

Eine derartige Verbindung 11 kann beispielsweise als Kombination eines Langlochs, welches parallel zur Betätigungsrichtung 4a orientiert ist, mit einem damit in Eingriff stehenden Stift ausgebildet sein. Dabei kann das Langloch auf der Steuerhülse 4 und der Stift auf dem Führungselement 10, oder das Langloch auf dem Führungselement 10 und der Stift auf der Steuerhülse 4 vorgesehen sein.

Eine andere Ausführungsform dieser Verbindung 11 ist beispielsweise durch die Ausbildung mindestens eines Anschlagselements auf der Steuerhülse 4 und/oder dem Führungselement 10 gegeben, wobei bei einer vorbestimmten maximalen Verschiebung der Steuerhülse 4 gegenüber dem Führungselement 10 das mindestens eine Anschlagselement mit einem Gegenstück des anderen Elements in Kontakt tritt, wodurch die weitere Verschiebung relativ zueinander verhindert wird.

Weiterhin ist eine Feder 7 gezeigt, auf der das, vom Ventilsitz 5 der Steuerhülse 4 abgewandte, Ende der Steuerhülse 4 ruht. Die Feder 7 stützt sich im Gehäuse 14 ab und beaufschlagt die Steuerhülse 4 mit einer elastischen Vorspannkraft, welche in der Zeichnung nach oben wirksam ist. Die Feder 7 treibt also die Steuerhülse 4 nach oben in Richtung des Ventiltellers 8.

Das Führungselement 10 ist auf einer Feder 12 gelagert, welche sich im Gehäuse 14 abstützt und das Führungselement 10 mit einer elastischen Vorspannkraft beaufschlagt, welche in der Zeichnung nach oben wirksam ist. Die Feder 12 treibt also das Führungselement 10 nach oben in Richtung der Steuerhülse 4 bzw. des Ventiltellers 8.

Weiterhin ist ein Arretierstift 2 einer Arretiervorrichtung dargestellt. Dieser durchdringt eine Wand des Gehäuses 14 und stößt in der gezeigten Darstellung mit seinem Ende 2a an die Außenfläche des Führungselements 10 an.

Aus der Arretiervorrichtung heraus wird der Arretierstift 2, mit einer Kraft, beispielsweise einer Federkraft, beaufschlagt, die ihn in der Zeichnung nach rechts antreibt und ihn, insbesondere sein Ende 2a, somit mit dem Führungselement 10 in Kontakt bringt.

Der Kontakt zwischen dem Ende 2a und dem Führungselement 10 ist dabei derart ausgebildet, dass das Führungselement 10 in dieser Position kraftschlüssig gehalten wird, und nicht durch die Feder 12 nach oben verschoben wird.

Der Arretierstift 2 ist dabei nach links und rechts verschiebbar vorgesehen und gegenüber dem Gehäuse 14 gleitend abgedichtet, sodass der Raum 31 nicht durch diese Öffnung entlüften kann.

Der Arretierstift 2 ist nach links in der Zeichnung nicht weiter fortgesetzt dargestellt. Auch auf eine Darstellung der weiteren Arretiervorrichtung wurde aus Gründen der Übersichtlichkeit verzichtet.

Im oberen Teil des Ventils 1 ist ein Aktuator 3 angeordnet. Dieser besteht aus zwei Kammern, welche durch einen Kolben 13 mit gleitender Abdichtung 13a zur Gehäusewand 14 voneinander getrennt sind. Der Kolben 13 ist dabei an seiner Oberseite durch eine Kraft einer Feder 7a, die sich im Gehäuse abstützt, entgegen der Betätigungsrichtung 4a beaufschlagt.

Die obere Kammer steht dabei fluidisch über einen Einlass 32 mit der Hauptluftleitung HLL in Verbindung, die untere Kammer ist als Steuerkammer SK ausgeführt und verfügt über einen Einlass 33, über den sie beispielsweise über eine nicht gezeigte Drosselstelle mit der Hauptluftleitung HLL in Verbindung steht.

Der Kolben 13 verfügt über eine Kolbenstange 13b, welche sich von der Unterseite des Kolbens 13 nach unten erstreckt. Die Kolbenstange 13b durchstößt dabei die untere Gehäusewand 14a der Steuerkammer SK und ist mit der Oberseite des Ventiltellers 8, also der Seite, die der Seite, die mit dem Ventilsitz 5 in Kontakt ist, gegenüber liegt, verbunden.

Ferner kann ein Anschlag (nicht dargestellt) vorgesehen sein, der das System Kolben 13, Kolbenstange 13b und Ventilteller 8, in seiner Bewegung entgegen der Betätigungsrichtung 4a oder auch in Betätigungsrichtung 4a begrenzt, so dass der Kolben 13 nicht beliebig weit nach unten oder oben durch die Feder 7a oder auftretende Druckunterschiede zwischen Hauptluftleitung HLL und Steuerkammer SK verschoben werden kann. Dies hat zur Folge, dass das System bestehend aus Kolben 13, Kolbenstange 13b und Ventilteller 8 und damit auch sämtliche Komponenten des Ventils 1, bei gelöster Bremse eine definierte Grundstellung einnehmen.

Weiterhin ist ein Kanal 34 vorgesehen, welcher eine Verbindung der Eintrittsöffnung 35 mit der oberen Kammer, welche mit der Hauptluftleitung HLL in Verbindung steht, herstellt.

Die Funktionsweise des dargestellten Ventils 1 ist wie folgt.

Zu Beginn sind die Bremsen des Schienenfahrzeugs gelöst, beispielsweise sind die Bremszylinder an die Atmosphäre EX entlüftet und die Hauptluftleitung HLL ist mit einem Druck von 5 bar, dem Regelbetriebsdruck, beaufschlagt. D.h. der Raum über dem Kolben 13 und der Raum 30 sind mit 5 bar beaufschlagt. Gleichzeitig ist auch die Steuerkammer SK über den Einlass 33 mit 5 bar beaufschlagt. Der Raum 31 ist über die Austrittsöffnung 36 an die Atmosphäre EX entlüftet.

Die Komponenten des Ventils 1 nehmen bei gelöster Bremse die in der Zeichnung dargestellten Stellungen ein.

Wird die Bremsung des Schienenfahrzeugs eingeleitet, so wird über ein Führerbremsventils die Hauptluftleitung HLL zentral entlüftet. Dies hat zur Folge, dass der Druck in der Hauptluftleitung zu sinken beginnt. Somit sinkt der Druck im Raum oberhalb des Kolbens 13 und in dem damit über den Kanal 34 verbundenen Raum 30.

Der Druck in der Steuerkammer SK kann aufgrund der zuvor erwähnten Drossel nicht mit derselben Geschwindigkeit wie in der Hauptluftleitung HLL sinken. Die Steuerkammer SK entleert sich somit langsamer als die Hauptluftleitung HLL. Sie ist somit zu diesem Zeitpunkt mit einem höheren Druck als die Hauptluftleitung HLL beaufschlagt.

Dies hat zur Folge dass sich am Kolben 13 eine Druckdifferenz zwischen Ober- und Unterseite einstellt. Aufgrund dieser Druckdifferenz wird der Kolben 13 in der Zeichnung nach oben bewegt, sobald diese Druckdifferenz ausreicht, die Kraft der Feder 7a zu überwinden.

Infolge dieser Bewegung hebt er den Ventilteller 8 an. Die Steuerhülse 4 wird aufgrund der Feder 7 ebenfalls nach oben bewegt, da die Verbindung 11 eine relative Verschiebung zwischen Steuerhülse 4 und Führungselement 10 zulässt. Der Ventilsitz 5 bleibt dabei mit dem Ventilteller 8 in Kontakt.

Ist die, durch die Verbindung 11 maximal zulässige Verschiebung zwischen Steuerhülse 4 und Führungselement 10 erreicht, kann die Steuerhülse 4 nicht mehr weiter durch die Feder 7 nach oben verschoben werden, da sie durch das Führungselement 10, welches durch den Arretierstift 2 festgehalten wird, an einer weiteren Verschiebung gehindert wird.

Führt nun der Kolben 13 seine Bewegung nach oben fort, so hebt sich der Ventilteller 8 vom Ventilsitz 5 der Steuerhülse 4 ab, wodurch nun eine fluidische Verbindung der Eintrittsöffnung 35 mit der Austrittsöffnung 36 hergestellt wird.

Die fluidische Verbindung setzt sich im Einzelnen zusammen aus der Eintrittsöffnung 35, dem Raum 30, dem Ventilsitz 5, dem Inneren der Steuerhülse 4, der Düse 6, dem Raum 31 und der Austrittsöffnung 36.

Raum 30 und somit die damit über den Kanal 34 verbundene Hauptluftleitung HLL ist nun mit der Atmosphäre EX verbunden, wodurch die Entlüftung der Hauptluftleitung HLL beschleunigt erfolgt.

Im weiteren Verlauf der Bremsung wird der Arretierstift 2 aufgrund einer vorbestimmten Bedingung zur Beendigung des Beschleunigungsvorgangs nach links bewegt. Dies kann beispielsweise aufgrund eines ansteigenden Bremszylinderdruckes erfolgen, welcher den Arretierstift 2, beispielsweise durch Beaufschlagung eines mit dem Arretierstift 2 verbundenen Kolbens mit dem ansteigenden Bremsdruck, nach links entgegen der Arretierkraft der Arretiervorrichtung bewegt. Eine andere Möglichkeit, den Arretierstift 2 nach links zu bewegen, könnte in einem Druckunterschied zwischen Hauptluftleitung HLL und Steuerkammer SK gesehen werden, wobei der Arretierstift 2 aufgrund einer überschrittenen vorbestimmten Druckdifferenz nach links bewegt wird.

Infolge der Bewegung des Arretierstiftes 2 nach links löst sich der Kontakt seines Endes 2a mit dem Führungselement 10. Das Führungselement 10 wird somit nicht mehr durch den Arretierstift 2, insbesondere dessen Ende 2a arretiert.

Dies hat zur Folge, dass sich das Führungselement 10 aufgrund der Kraft der Feder 12 nach oben bewegt.

Dadurch wird auch die Steuerhülse 4 nicht mehr länger in ihrer Bewegung nach oben durch das Führungselement 10 blockiert. Die Steuerhülse 4 bewegt sich somit, angetrieben durch die Feder 7, nach oben auf den Ventilteller 8 zu.

Der Ventilteller 8 befindet sich immer noch in einer höheren Position als in Fig. 1 dargestellt, da zwischen der Hauptluftleitung HLL und der Steuerkammer SK nach wie vor ein Druckunterschied besteht.

Die Bewegung der Steuerhülse 4, angetrieben durch die Feder 7, und des Führungselements 10, angetrieben durch die Feder 12, wird so weit nach oben fortgeführt, bis der Ventilsitz 5 der Steuerhülse 4 wieder dichtend mit dem Ventilteller 8 in Kontakt tritt.

Dadurch ist die fluidische Verbindung zwischen der Hauptluftleitung HLL und der Atmosphäre EX wieder unterbrochen, die beschleunigte Entlüftung der Hauptluftleitung HLL ist somit beendet. Die Bremsung wird fortgeführt.

Soll die angelegte Bremse wieder gelöst werden, wird die Hauptluftleitung HLL wieder mit Druckluft bis auf 5 bar, also Regelbetriebsdruck, beaufschlagt. Dadurch erfolgt eine Angleichung der Drücke in den Räumen ober- und unterhalb des Kolbens 13, also in der Hauptluftleitung HLL und der Steuerkammer SK.

Dies hat zur Folge, dass sich der Kolben 13 durch die Kraft der Feder 7a wieder nach unten bewegt. Mit dem Kolben 13 bewegt sich der, über die Kolbenstange 13b verbundene Ventilteller 8 ebenfalls nach unten.

Dadurch schiebt dieser die Steuerhülse 4, mit der er über den Ventilsitz 5 in Kontakt steht, und das Führungselement 10 über die Verbindung 11 entgegen der Kräfte der Federn 7, 12 nach unten.

Das Führungselement 10 wird dabei erst verschoben, wenn sich Steuerhülse 4 und Führungselement 10 maximal zulässig aufeinander zubewegt haben, so dass die Verbindung 11 nun Kräfte der Steuerhülse 4 auf das Führungselement 10 nach unten übertragen kann.

Schließlich wird in der Arretiervorrichtung entweder durch den sinkenden Bremszylinderdruck oder durch die sich angleichenden Drücke der Hauptluftleitung HLL und der Steuerkammer SK, die Bedingung für eine Verschiebung des Arretierstiftes 2 nach links widerrufen, wodurch der Arretierstift 2, beispielsweise durch eine Kraft einer Feder innerhalb der Arretiervorrichtung, wieder nach rechts in die in Fig. 1 gezeigte Stellung überführt wird.

Hier trifft das Ende 2a des Arretierstiftes 2 wieder auf die Oberfläche des Führungselements 10 und bildet wieder einen kraftschlüssigen Kontakt aus, wodurch das Führungselement 10 wieder in der gezeigten Position arretiert wird.

Die Position des Arretierstiftes 2 ist dabei so auf die anderen Elemente des Ventils 1 abgestimmt, dass bei Arretierung des Führungselements 10 durch den Arretierstift 2 keine Kraft des Führungselements 10 auf die Steuerhülse 4 parallel zur Betätigungsrichtung 4a übertragen wird.

Führungselement 10 und Steuerhülse 4 sind nun über die Verbindung 11 parallel zur Betätigungsrichtung 4a entkoppelt.

In dieser Konfiguration wird die Steuerhülse 4 allein durch die Feder 7, unabhängig von der Position des Führungselements 10 nach oben gegen den Ventilteller 8 gedrückt. Die Anordnung ist so gestaltet, dass die Verbindung 11 immer in Betätigungsrichtung 4a überwunden werden muss, bevor das Beschleunigungsventil öffnet, da die Druckfeder 12 das Führungselement 10 im nicht arretierten Zustand immer an den oberen Anschlag der Verbindung 11 anlegt. Diese Eigenschaft führt zu einer größeren Stabilität gegenüber Druckschwankungen in der Hauptluftleitung HLL.

Dadurch steht der Kontakt zwischen Ventilteller 8 und Ventilsitz 5 unter einer, von der Arretierung durch den Arretierstift 2 unabhängigen Dichtkraft, welche durch die Feder 7 aufgebracht wird.

Eine derartige Ausbildung des Beschleunigungsventils 1 ist wesentlich unempfindlicher gegenüber Stößen, welche sich während der Fahrt ereignen können, oder gegenüber auftretenden Druckunterschieden zwischen der Hauptluftleitung HLL und der Steuerkammer SK.

Es wird also eine nicht erwünschte Öffnung des Ventils 5, 8 aufgrund der Kraft der Feder 7 verhindert, oder zumindest erschwert. Somit wird eine unbeabsichtigte Entlüftung der Hauptluftleitung HLL an die Atmosphäre EX vermieden.

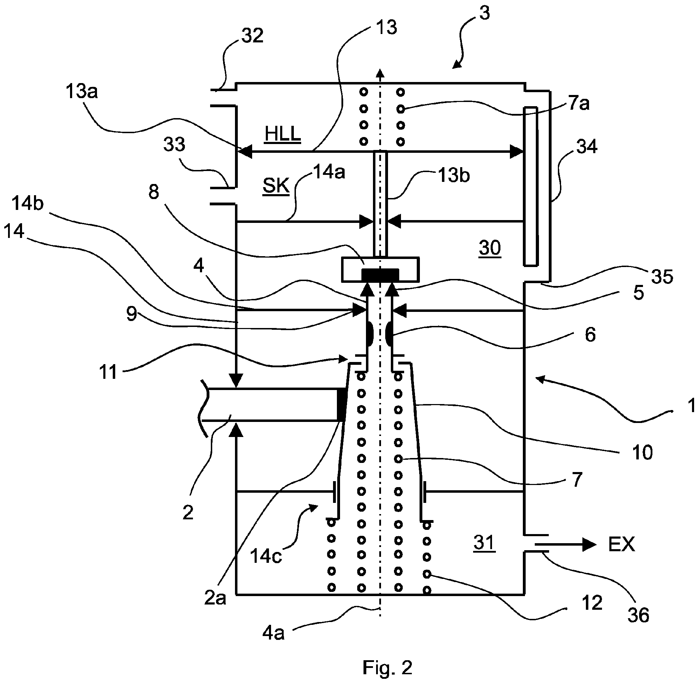

**Fig. 2** zeigt eine vorteilhafte Weiterbildung der Ausführungsform aus Fig. 1.

Der prinzipielle Aufbau und die Funktionsweise entsprechen im Wesentlichen denen aus Fig. 1. Unterschiede bestehen lediglich in der Ausgestaltung des Führungselements 10 und des Arretierstiftes 2, insbesondere in der Ausgestaltung dessen Endes 2a. Daher wird an dieser Stelle lediglich auf diese Ausgestaltungsmerkmale eingegangen.

Das Führungselement 10 weist hier keine rein zylindrische Form auf, sondern es ist im oberen Bereich konisch ausgestaltet, wobei es sich nach oben, also in Richtung der Steuerhülse 4 verjüngt.

Dementsprechend ist der Arretierstift 2, insbesondere dessen Ende 2a so ausgestaltet, dass dieser vollflächig mit der Oberfläche des Führungselements 10 in Kontakt treten kann.

Dadurch ergibt sich keine rein kraftschlüssige Verbindung zwischen dem Ende 2a des Arretierstiftes 2 und der Oberfläche des Führungselements 10. Vielmehr wird durch den Kontakt der korrespondierenden konischen Flächen erreicht, dass eine Bewegung des Führungselements 10 in Betätigungsrichtung 4a zusätzlich durch die Stirnseite des Endes 2a des Arretierstiftes 2 blockiert wird.

Durch die Feder 12 wird zudem das konusförmige Führungselement 10 so gegen das Ende 2a des Arretierstiftes 2 gedrückt, dass sich die Reibkraft zwischen beiden verstärkt.

Eine derartige Arretierung hat den Vorteil, dass sie gegenüber Stößen weniger empfindlich ist, und dass keine derart hohe Anpresskraft des Endes 2a des Arretierstiftes 2 wie in der Ausführungsform aus Fig. 1 erforderlich ist.

Auf diese Weise kann zusätzlich zum sicheren Verschluss des Ventils 5, 8 eine sicherere Arretierung des Führungselements 10 erreicht werden.

So wird, sichergestellt, dass sich das Führungselement 10 nicht aufgrund von Stößen frühzeitig aus der Arretierung löst und somit zu früh die beschleunigte Entlüftung der Hauptluftleitung HLL beendet.

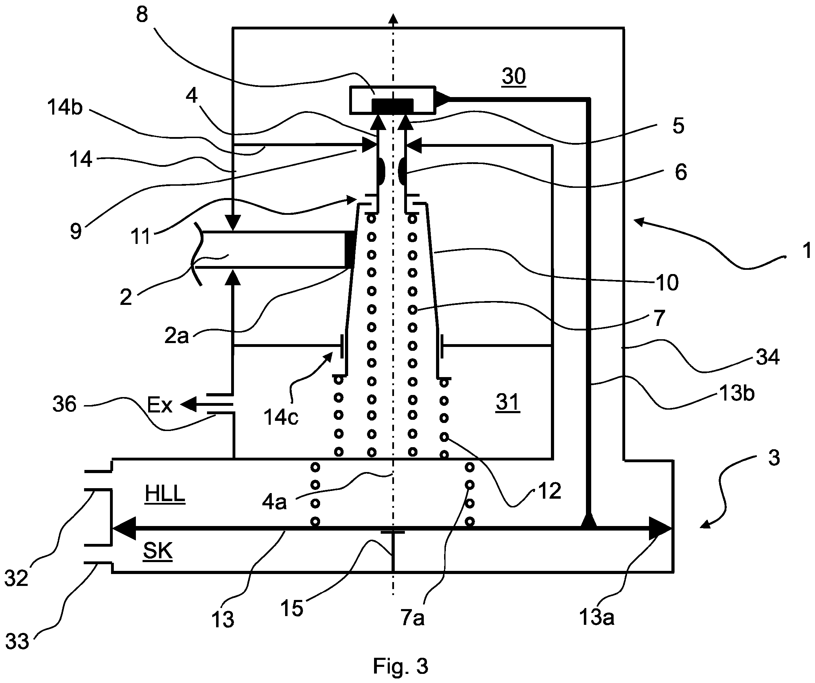

**Fig. 3** zeigt eine alternative Ausführungsform des erfindungsgemäßen Ventils. Im Gegensatz zu den Ausführungsformen der Fig. 1 und 2 ist hier der Aktuator 3 zur Betätigung des Ventils 1 an dessen Unterseite angeordnet. Der weitere Aufbau entspricht dem aus Fig. 2, daher werden hier lediglich Aufbau und Funktionsweise des Aktuators 3 beschrieben.

Der Aktuator 3 weist einen Raum auf, der über einen Einlass 32 mit der Hauptluftleitung HLL in Verbindung steht. Dieser Raum ist über einen Kanal 34 mit dem ersten Raum 30 des Ventils 1 verbunden. Innerhalb des Aktuators 3 ist ein Kolben 13 vorgesehen, welcher parallel zur Betätigungsrichtung 4a verschiebbar ist. Der Kolben 13 bildet dabei die Unterseite des Raums, der mit der Hauptluftleitung HLL in Verbindung steht und weist eine gleitende Abdichtung 13a auf, welche ein Ausströmen von Druckluft aus diesem Raum verhindert. Ferner wird der Kolben 13 mittels einer Feder 7a mit einer Kraft entgegen der Betätigungsrichtung 4a beaufschlagt. Die Feder 7a stützt sich dabei im Gehäuse des Aktuators 3 ab. Der Kolben 13 weist weiterhin eine Kolbenstange 13b auf, die mit dessen Oberseite verbunden ist und durch den Kanal 34 in den ersten Raum 30 geführt ist. Im ersten Raum 30 ist diese Kolbenstange 13b fest mit dem Ventilteller 8 verbunden. Somit bilden Kolben 13, Kolbenstange 13b und Ventilteller 8 einen einheitlich verschiebbaren Verbund.

Der Aktuator 3 weist einen weiteren Raum auf, der unterhalb des Kolbens 13 angeordnet ist und der als Steuerkammer SK ausgeführt ist. Dieser Raum steht über einen weiteren Einlass 33 und über eine nicht dargestellte Drossel mit der Hauptluftleitung HLL in Verbindung. Innerhalb der Steuerkammer SK ist ein Anschlag 15 vorgesehen, auf dem der Kolben 13 durch die Kraft der Feder 7a zur Auflage kommt. Durch den Anschlag 15 wird das Ventil 1 in die gezeigte Konfiguration überführt, wodurch erreicht wird, dass stets eine definierte Ausgangsstellung der Komponenten bei geschlossenem Ventil 1 vorliegt.

Wird bei einer Bremsung die Hauptluftleitung HLL entlüftet, so beginnt der Druck in der Hauptluftleitung HLL und in der Steuerkammer SK zu sinken. Da jedoch, bedingt durch die Drossel, der Druck in der Steuerkammer SK langsamer sinkt als in der Hauptluftleitung HLL, ist nun die Unterseite des Kolbens 13 mit einem höheren Druck beaufschlagt als die Oberseite. Dadurch wirkt auf den Kolben 13 eine Kraft in Richtung der Betätigungsrichtung 4a. Ist diese Kraft größer als die entgegenwirkende Kraft der Feder 7a, so beginnt sich der Kolben 13 in Betätigungsrichtung 4a zu bewegen, wodurch auch der Ventilteller 8 angehoben wird und die Hauptluftleitung HLL über den Kanal 34, den ersten Raum 30, die Steuerhülse 4, den Führungskörper 10 und den zweiten Raum 31 an die Atmosphäre EX entlüftet wird.

Die hier vorstehend beschriebenen Ausführungsformen geben lediglich konkrete Ausführungsbeispiele der Erfindung wieder und wirken nicht beschränkend auf den Gegenstand der Erfindung. Vielmehr lassen sich weitere Ausführungsformen durch Kombination oder Auslassung einzelner Merkmale der unterschiedlichen Ausführungsformen bilden.

Eine weitere Ausführungsform kann beispielsweise gebildet werden, indem die Kolbenstange 13b keine feste Verbindung mit dem Ventilteller 8 aufweist. Sie ist hier in Form eines Stößels ausgebildet, welcher durch den Kolben 13 bewegt wird und mit einem freien Ende so an den Ventilteller 8, beispielsweise an dessen Unterseite, anstößt, dass sie diesen in Betätigungsrichtung 4a zu bewegen vermag. Wird die Kolbenstange 13b in Betätigungsrichtung 4a bewegt, so hebt sie auch hier den Ventilteller 8 an.

Zusätzlich, oder auch als alternative Ausführungsform, kann auch die Verbindung der Kolbenstange 13b zum Kolben 13 als nicht feste Verbindung ausgeführt sein. Der Kolben 13 tritt mit einem anderen Ende der Kolbenstange 13b, ausgeführt als Stößel, in Kontakt und schiebt diese in Betätigungsrichtung 4a.

In einer weiteren Ausführungsform sind mehrere Kolbenstangen 13b vorgesehen, die beispielsweise in regelmäßiger Anordnung auf einem Kreis um die Betätigungsrichtung angeordnet sind. So sind beispielsweise drei Kolbenstangen 13b denkbar, welche auf einem Kreis im Winkelabstand von 120° um die Betätigungsrichtung 4a angeordnet sind. Die Kolbenstangen 13b können ebenfalls wie oben beschrieben als Stößel ausgebildet sein. Eine derartige Anordnung hat den Vorteil, dass sichergestellt ist, dass die Betätigungskräfte zwischen Kolben 13 und Ventilteller 8 gleichmäßig übertragen werden.

### BEZUGSZEICHENLISTE

- 1: Ventil (Beschleunigungsventil)
- 2: Arretierstift
- 2a: Ende (Arretierstift)
- 3: Aktuator
- 4: Steuerhülse (Steuerelement)
- 4a: Betätigungsrichtung
- 5: Ventilsitz (zweites Ventilelement)
- 6: Düse
- 7: Feder
- 7a: Feder
- 8: Ventilteller (erstes Ventilelement)
- 9: gleitende Abdichtung
- 10: Führungselement
- 11: Verbindung (zwischen Steuerhülse 4 und Führungselement 10)
- 12: Feder
- 13: Kolben
- 13a: gleitende Abdichtung
- 13b: Kolbenstange
- 14: Gehäuse
- 14a: Gehäusewand
- 14b: Gehäusewand
- 14c: Führung
- 15: Anschlag
- 30: erster Raum
- 31: zweiter Raum
- 32: Einlass (Hauptluftleitung HLL)
- 33: Einlass (Steuerkammer SK)
- 34: Kanal
- 35: Eintrittsöffnung
- 36: Austrittsöffnung
- HLL: Hauptluftleitung
- SK: Steuerkammer

## Patentansprüche

1. Ventil (1), insbesondere Beschleunigungsventil, zur Herstellung und sicheren Unterbrechung einer fluidischen Verbindung einer Hauptluftleitung (HLL) mit der Atmosphäre (EX), aufweisend:
- ein Gehäuse (14) mit einer Eintrittsöffnung (35) und einer Austrittsöffnung (36), die fluidisch miteinander in Verbindung stehen,
- ein erstes Ventilelement (8), das dazu ausgebildet ist, die fluidische Verbindung zwischen der Eintrittsöffnung (35) und der Austrittsöffnung (36) herzustellen oder zu unterbrechen,
- ein zweites Ventilelement (5), das dazu ausgebildet ist, zur Unterbrechung der fluidischen Verbindung dichtend mit dem ersten Ventilelement (8) in Kontakt zu treten, wobei
der Kontakt zwischen dem ersten Ventilelement (8) und dem zweiten Ventilelement (5) durch ein zusätzliches Element mit einer elastischen Vorspannkraft beaufschlagt ist, wodurch die Kontaktkraft des ersten Ventilelements (8) und/oder des zweiten Ventilelements (5) erhöht wird, **dadurch gekennzeichnet, dass**
das zweite Ventilelement (5) auf einem Steuerelement (4) ausgebildet ist, das parallel zu der Betätigungsrichtung (4a) beweglich im Gehäuse (14) vorgesehen ist, und/oder Bestandteil der fluidischen Verbindung ist, wobei
das Ventil (1) weiterhin ein Führungselement (10) aufweist, das dazu ausgebildet ist, eine Haltekraft parallel zur Betätigungsrichtung (4a) auf das Steuerelement (4) zu übertragen, um zu verhindern, dass das zweite Ventilelement (5) mit dem ersten Ventilelement (8) in Kontakt tritt, wobei
zwischen Steuerelement (4) und Führungselement (10) eine Verbindung (11) ausgebildet ist, die eine begrenzte Relativbewegung zwischen Steuerelement (4) und Führungselement (10) parallel zu der Betätigungsrichtung (4a) erlaubt.

2. Ventil (1) nach Anspruch 1, wobei
das erste Ventilelement (8) zur Herstellung und Unterbrechung der fluidischen Verbindung parallel zu einer Betätigungsrichtung (4a) beweglich im Gehäuse (14) vorgesehen ist, und/oder
Bestandteil der fluidischen Verbindung ist.

3. Ventil (1) nach einem der vorangegangenen Ansprüche, wobei
die Verbindung (11) in Form einer Kombination aus Langloch und Stift oder in Form einer Kombination aus Anschlag und Gegenstück ausgebildet ist.

4. Ventil (1) nach einem der vorangegangenen Ansprüche, weiterhin aufweisend:
- einen Arretierstift (2), der dazu ausgebildet ist, mit dem Führungselement (10) in Kontakt zu treten und dieses kraftschlüssig zu arretieren.

5. Ventil (1) nach Anspruch 4, wobei
die Arretierung kraftschlüssig und in mindestens einer Richtung parallel zur Betätigungsrichtung (4a) blockierend erfolgt.

6. Ventil (1) nach einem der vorangegangenen Ansprüche, wobei
das zusätzliche Element mindestens eine Feder (7, 7a) ist, die das erste Ventilelement (8) und/oder das zweite Ventilelement (5) direkt oder indirekt mit einer Kraft beaufschlagt und sich im Gehäuse (14) abstützt.

7. Ventil (1) nach einem der vorangegangenen Ansprüche, wobei
das Führungselement (10) durch eine elastische Vorspannkraft einer Feder (12), die sich im Gehäuse (14) abstützt, parallel zur Betätigungsrichtung (4a) in Richtung des ersten Ventilelements (8) beaufschlagt ist.

8. Ventil (1) nach einem der Ansprüche 2 bis 7, weiterhin aufweisend:
- einen Aktuator (3), der dazu ausgebildet ist, das erste Ventilelement (8) zur Herstellung der fluidischen Verbindung aufgrund eines Druckunterschiedes in der Hauptluftleitung (HLL) und einer Steuerkammer (SK) parallel zur Betätigungsrichtung (4a) zu bewegen.

9. Ventil (1) nach einem der vorangegangenen Ansprüche, aufweisend:
- mindestens einen Anschlag (15), der dazu ausgebildet ist, die Bewegung des ersten Ventilelements (8) oder des zweiten Ventilelements (5) zu begrenzen.

10. Ventil (1) nach einem der vorangegangenen Ansprüche, wobei das erste Ventilelement (8) als Ventilteller, und/oder
das zweite Ventilelement (5) als Ventilsitz, und/oder
das Steuerelement (4) als Steuerhülse, und/oder
das Führungselement (10) als Hülse ausgeführt ist.

11. Steuerventil für Druckluftbremsen, aufweisend:
- eine fluidische Verbindung mit einer Bremsleitung oder mit einem Bremszylinder,
- eine fluidische Verbindung mit einer Hauptluftleitung (HLL),
- eine fluidische Verbindung mit einer Steuerkammer (SK),
- eine fluidische Verbindung mit einem Druckspeicher, wobei
das Steuerventil dazu ausgebildet ist, die Bremsleitung oder den Bremszylinder aufgrund eines Druckunterschieds zwischen der Hauptluftleitung (HLL) und der Steuerkammer (SK) mit einer definierten Menge an Druckluft aus dem Druckspeicher zu beaufschlagen, die dem Druckunterschied entspricht,
**dadurch gekennzeichnet, dass**
zur beschleunigten Entlüftung der Hauptluftleitung (HLL) ein Ventil (1) nach einem der Ansprüche 1 bis 10 vorgesehen ist.

12. Schienenfahrzeug, aufweisend eine pneumatische Bremsanlage mit einem Steuerventil nach Anspruch 11.

## Claims

1. Valve (1), in particular an acceleration valve, for establishing and securely interrupting a fluidic connection of a main air pipe (HLL) to atmosphere (EX), having:
- a housing (14) with an inlet opening (35) and an outlet opening (36) which are fluidically connected together,
- a first valve element (8) which is configured to establish or interrupt the fluidic connection between the inlet opening (35) and the outlet opening (36),
- a second valve element (5) which is configured to come into sealing contact with the first valve element (8) in order to interrupt the fluidic connection, wherein
the contact between the first valve element (8) and the second valve element (5) is loaded with an elastic preload force by an additional element, whereby the contact force of the first valve element (8) and/or the second valve element (5) is increased, **characterised in that**
the second valve element (5) is formed on a control element (4) which is provided in the housing (14) so as to be movable parallel to an actuation direction (4a), and/or is part of the fluidic connection, wherein
the valve (1) further has a guide element (10) which is configured to transmit a holding force to the control element (4) parallel to the actuation direction (4a) in order to prevent the second valve element (5) from coming into contact with the first valve element (8), wherein
a connection (11) is formed between the control element (4) and the guide element (10) so as to allow a limited relative movement between the control element (4) and the guide element (10) parallel to the actuation direction (4a).

2. Valve (1) according to claim 1, wherein
to establish and interrupt the fluidic connection, the first valve element (8) is provided in the housing (14) so as to be movable parallel to an actuation direction (4a), and/or
is part of the fluidic connection.

3. Valve (1) according to any of the preceding claims, wherein
the connection (11) takes the form of a combination of a slot and pin, or a combination of a stop and counter-piece.

4. Valve (1) according to any of the preceding claims, further having:
- a locking pin (2) which is configured to come into contact with the guide element (10) and lock this by force fit.

5. Valve (1) according to claim 4, wherein
the locking takes place by force fit with a blocking effect in at least one direction parallel to the actuation direction (4a).

6. Valve (1) according to any of the preceding claims, wherein
the additional element is at least one spring (7, 7a) which directly or indirectly loads the first valve element (8) and/or the second valve element (5) with a force and is supported in the housing (14).

7. Valve (1) according to any of the preceding claims, wherein
the guide element (10) is loaded with an elastic preload force of a spring (12), which is supported in the housing (14), parallel to the actuation direction (4a), in the direction of the first valve element (8).

8. Valve (1) according to any of claims 2 to 7, further having:
- an actuator (3) which is configured, in order to create the fluidic connection, to move the first valve element (8) parallel to the actuation direction (4a) because of a pressure difference between the main air pipe (HLL) and a control chamber (SK).

9. Valve (1) according to any of the preceding claims, having:
- at least one stop (15) which is configured to limit the movement of the first valve element (8) or second valve element (5).

10. Valve (1) according to any of the preceding claims, wherein
the first valve element (8) is configured as a valve disc, and/or
the second valve element (5) is configured as a valve seat, and/or
the control element (4) is configured as a control sleeve, and/or
the guide element (10) is configured as a sleeve.

11. Control valve for compressed air brakes, having:
- a fluidic connection to a brake line or brake cylinder,
- a fluidic connection to a main air pipe (HLL),
- a fluidic connection to a control chamber (SK),
- a fluidic connection to a pressure accumulator, wherein
the control valve is configured to load the brake line or the brake cylinder, because of a pressure difference between the main air pipe (HLL) and the control chamber (SK), with a defined quantity of compressed air from the pressure accumulator which corresponds to the pressure difference,
**characterised in that**
for accelerated venting of the main air pipe (HLL), a valve (1) according to any of claims 1 to 10 is provided.

12. Rail vehicle having a pneumatic brake system with a control valve as claimed in claim 11.

## Revendications

1. Valve (1), notamment valve d'accélération, pour ménager et interrompre de manière sûre une communication fluidique d'un conduit (HLL) d'air principal avec l'atmosphère (EX), comportant :
- un boîtier (14) ayant une ouverture (35) d'entrée et une ouverture (36) de sortie, qui sont en communication fluidique l'une avec l'autre,
- un premier élément (8) de valve, qui est constitué pour ménager ou pour interrompre la communication fluidique entre l'ouverture (35) d'entrée et l'ouverture (36) de sortie,
- un deuxième élément (5) de valve, qui est constitué pour entrer en contact, pour l'interruption de la communication fluidique, d'une manière étanche avec le premier élément (8) de valve,
dans laquelle le contact entre le premier élément (8) de valve et le deuxième élément (8) de valve est, par un élément supplémentaire, soumis à une force élastique de précontrainte, grâce à quoi la force de contact du premier élément (8) de valve et/ou du deuxième élément (5) de valve est augmentée,
**caractérisée en ce que**
le deuxième élément (5) de valve est constitué sur un élément (4) de commande, qui est prévu mobile dans le boîtier (14) parallèlement à la direction (4a) d'actionnement et/ou est une partie constitutive de la communication fluidique, dans laquelle
la valve (1) a en outre un élément (10) de guidage, qui est constitué pour transmettre une force de maintien parallèlement à la direction (4a) d'actionnement à un élément (4) de commande afin d'empêcher que le deuxième élément (5) de valve entre en contact avec le premier élément (8) de valve, dans laquelle
entre l'élément (4) de commande et l'élément (10) de guidage est constituée une liaison (11), qui autorise un mouvement relatif limité entre l'élément (4) de commande et l'élément (10) de guidage, parallèlement à la direction (4a) d'actionnement.

2. Valve (1) suivant la revendication 1, dans laquelle
le premier élément (8) de valve est prévu mobile dans le boîtier (14) parallèlement à une direction (4a) d'actionnement pour ménager et interrompre la communication fluidique et/ou
est une partie constitutive de la communication fluidique.

3. Valve (1) suivant l'une des revendications précédentes, dans laquelle
la liaison (11) est constituée sous la forme d'une liaison de tenon et mortaise ou sous la forme d'une combinaison d'une butée d'une pièce antagoniste.

4. Valve (1) suivant l'une des revendications précédentes, comprenant en outre :
- une goupille (2) d'arrêt, qui est constituée pour entrer en contact avec l'élément (10) de guidage et arrêter celui-ci à coopération de force.

5. Valve (1) suivant la revendication 4, dans laquelle
l'arrêt s'effectue à coopération de force et à blocage dans au moins une direction parallèle à la direction (4a) d'actionnement.

6. Valve (1) suivant l'une des revendications précédentes, dans laquelle
l'élément supplémentaire est au moins un ressort (7, 7a), qui applique directement ou indirectement une force au premier élément (8) de valve et/ou au deuxième élément (5) de valve et qui s'appuie dans le boîtier (14).

7. Valve (1) suivant l'une des revendications précédentes, dans laquelle
l'élément (10) de guidage est soumis, dans la direction du premier élément (8) de valve parallèlement à la direction (4) d'actionnement, à une force élastique de précontrainte d'un ressort (12), qui s'appuie dans le boîtier (14).

8. Valve (1) suivant l'une des revendications 2 à 7, comportant en outre :
- un actionneur (3), qui est constitué pour déplacer, parallèlement à la direction (4a) d'actionnement, le premier élément (8) de valve, pour ménager la communication fluidique en raison d'une différence de pression dans le conduit (HLL) d'air principal et une chambre (SK) de commande.

9. Valve (1) suivant l'une des revendications précédentes, comportant :
- au moins une butée (15) qui est constituée pour limiter le déplacement du premier élément (8) de valve ou du deuxième élément (5) de valve.

10. Valve (1) suivant l'une des revendications précédentes, dans laquelle
le premier élément (8) de valve est réalisé sous la forme d'un plateau de valve, et/ou
le deuxième élément (5) de valve est réalisé sous la forme d'un siège de valve, et/ou
l'élément (4) de commande est réalisé sous la forme d'un manchon de commande, et/ou
l'élément (10) de guidage est réalisé sous la forme d'un manchon.

11. Valve de commande de frein à air comprimé, comportant :
- une communication fluidique avec un conduit de frein ou avec un cylindre de freins,
- une communication fluidique avec un conduit (HLL) d'air principal,
- une communication fluidique avec une chambre (SK) de commande,
- une communication fluidique avec un accumulateur de pression, dans laquelle
la valve de commande est constituée pour appliquer au conduit de frein ou au cylindre de frein, en raison d'une différence de pression entre le conduit (HLL) d'air principal et la chambre (SK) de commande, une quantité définie d'air comprimé provenant de l'accumulateur de pression, qui correspond à la différence de pression,
**caractérisée en ce que**
il est prévu une valve (1) suivant l'une des revendications 1 à 10 pour la mise à l'atmosphère accélérée du conduit (HLL) d'air principal.

12. Véhicule ferroviaire, comportant une installation pneumatique de frein ayant une valve de commande suivant la revendication 11.
